Europäisches Patentamt

European Patent Office

Office européen des brevets

(19)

(11) Numéro de publication : **0 404 621 B1**

## (12) FASCICULE DE BREVET EUROPEEN

(45) Date de publication du fascicule du brevet :
01.09.93 Bulletin 93/35

(51) Int. Cl.⁵ : **B64G 1/32, B64G 1/44**

(21) Numéro de dépôt : **90401488.3**

(22) Date de dépôt : **01.06.90**

(54) **Système de contrôle d'attitude de satellite utilisant une boucle magnétique supraconductrice.**

(30) Priorité : **23.06.89 FR 8908416**

(43) Date de publication de la demande :
**27.12.90 Bulletin 90/52**

(45) Mention de la délivrance du brevet :
**01.09.93 Bulletin 93/35**

(84) Etats contractants désignés :
**DE ES GB IT NL SE**

(56) Documents cités :
**EP-A- 0 295 978**
**CH-A- 470 288**
**US-A- 3 390 848**

(73) Titulaire : **AEROSPATIALE Société Nationale Industrielle**
**37, Boulevard de Montmorency**
**F-75781 Paris Cédex 16 (FR)**

(72) Inventeur : **Reboux, Alain**
**1bis, rue du Mitan**
**F-83440 Fayence (FR)**

(74) Mandataire : **Rinuy, Santarelli**
**14, avenue de la Grande Armée**
**F-75017 Paris (FR)**

Jouve, 18, rue Saint-Denis, 75001 PARIS

EP 0 404 621 B1

## Description

L'invention concerne un système de contrôle et de stabilisation d'attitude pour satellite.

Quelle que soit son orbite, un satellite est soumis à des couples perturbateurs externes à variation lente, liés à son environnement, dont les causes majeures sont :
- la trainée atmosphérique (surtout en cas d'orbite basse),
- la pression de radiation solaire,
- le gradient de gravité terrestre,
- le champ magnétique terrestre.

Ces couples apparaissent d'une façon générale du fait de la dissymétrie du satellite (sur le plan mécanique ou géométrique, ou celui des propriétés mécaniques ou optiques des matériaux utilisés).

Dans le cas d'un satellite stabilisé par rotation, l'action de ces perturbations est freinée grâce à la rigidité gyroscopique offerte par la rotation du corps du satellite.

Dans le cas d'un satellite stabilisé trois axes, une telle rigidité est en général créée artificiellement au moyen de roues d'inertie. L'effet des couples externes - variation du vecteur moment cinétique - peut être annulé en contrôlant de façon convenable la vitesse des roues (création d'un écart de vitesse). Lorsque la vitesse limite est atteinte, la "désaturation" des roues (vitesse différentielle) est effectuée en utilisant des actuateurs de contrôle d'attitude : tuyères, voiles solaires ou bobines magnétiques en général.

L'emploi des tuyères a pour principal inconvénient de conduire à des perturbations brutales d'attitude, à amortir sur un temps important, conduisant à des interruptions de mission, en particulier pour l'observation de la terre.

L'utilisation de bobines magnétiques autorise une compensation continue. Cependant, la faible valeur du champ magnétique terrestre (environ $10^{-7}$ tesla) et le niveau des couples à compenser ($10^{-5}$ à $10^{-4}$Nm suivant la dissymétrie du satellite) conduisent à des performances typiques de 100 à 1000 ampères.tours.$m^2$ et donc à des masses de bobines magnétiques généralement importantes (10 à 20 kg voire plus). L'utilisation des bobines magnétiques est ainsi généralement limitée au contrôle sur un seul axe du satellite, pour la désaturation des roues d'inertie.

Par ailleurs, certaines configurations de satellite peuvent présenter une forte dissymétrie. Par exemple, de nombreuses missions d'observation de la terre nécessitent un refroidissement du plan focal de l'instrument infrarouge, en vue de performances satisfaisantes dans les longueurs d'onde IR (infrarouge). Les températures requises (< 100°K) sont généralement obtenues au moyen de radiateurs passifs, situés sur les faces Nord ou Sud non ensoleillés du satellite (on suppose l'orbite géostationnaire).

Dans le cas d'une stabilisation trois axes, ces faces sont généralement utilisées pour implanter les deux ailes d'un générateur solaire orientable. Or, de tels appendices sont incompatibles avec le fonctionnement correct d'un radiateur passif qui nécessite un champ de vue parfaitement dégagé vers le froid spatial.

Ceci conduit à recourir par exemple à une configuration dissymétrique, avec un générateur solaire à aile unique, implanté sur la face opposée au(x) refroidisseur(s). La compensation du couple de pression de radiation solaire important ainsi créé impose généralement dans ce cas l'implantation d'une "voile solaire" au bout d'un mât de grande longueur, sur la face opposée à l'aile du générateur solaire. Le niveau (environ $10^{-4}$Nm) et l'orientation de ce couple rendent en effet les bobines magnétiques peu adaptées à ce cas de figure.

Cette solution implique, outre sa masse, les inconvénients suivants :
- une diminutation des performances du système de refroidissement, puisque la voile se trouve nécessairement dans le champ de vue de ce dernier,
- le déploiement de la voile constitue un point de défaillance unique, ce que l'on cherche à éviter pour des raisons de fiabilité,
- l'impossibilité de moduler le couple créé opposé au couple de pression de radiation solaire, alors que ce dernier subit une variation saisonnière (dûe à l'inclinaison du plan de l'orbite terrestre).

L'invention vise à pallier les inconvénients précités en proposant un satellite à générateur solaire équipé d'un dispositif de compensation d'attitude qui soit léger, fiable, peu enconbrant et économe en énergie et qui soit adapté à atténuer efficacement les couples perturbateurs notamment dûs à la pression de radiation solaire.

L'invention propose ainsi un satellite comportant un générateur solaire déployable orientable vis à vis du corps de satellite et destiné à être maintenu en permanence en regard du Soleil, ainsi qu'un dispositif de stabilisation d'attitude, caractérisé en ce que ce dispositif de stabilisation d'attitude comporte au moins :
- une boucle fermée en matériau supraconducteur portée par un support lié au générateur solaire, et disposée sur une face de ce support qui est sensiblement orientée à l'opposé du Soleil ;
- une boucle secondaire parallèle à la boucle fermée, sensiblement de même forme et dimensions que la boucle fermée, portée par ce support à proximité de cette boucle ;
- un circuit résistif porté par ce support à proximité d'une partie au moins de la boucle fermée ; et

2

- un circuit électrique d'alimentation sélective connecté électriquement à la boucle secondaire et au circuit résistif.

Selon des dispositions préférées de l'invention :

- la boucle fermée en matériau supraconducteur est dans un plan parallèle aux panneaux du générateur solaire ;
- le support est soit un panneau additionnel lié mécaniquement au générateur solaire, soit un panneau de celui-ci (portant des cellules solaires) ;
- ce panneau additionnel est articulé sur l'extrémité du générateur solaire qui est le plus éloigné du corps de satellite ;
- la boucle fermée en matériau supraconducteur est formée d'un ruban sensiblement circulaire ou bien par un dépôt de couches minces de matériau supraconducteur sur un substrat, ou analogue ;
- la boucle fermée est portée par un cadre relié mécaniquement au support par des moyens en matériau thermiquement isolant ;
- la boucle secondaire est disposée sur le support à l'opposé de cette boucle ;
- le circuit résistif et la boucle secondaire sont alimentés électriquement par le générateur solaire ;
- le générateur solaire est à forte dissymétrie, par exemple à aile unique.

La solution proposée par l'invention repose donc sur :

- l'utilisation d'une boucle de courant implantée sur l'aile du générateur solaire et interagissant avec le champ magnétique terrestre, de façon à créer un couple sensiblement égal et directement opposé au couple de pression solaire,
- l'implantation de ce circuit sur la face "à l'ombre" (non exposée au rayonnement solaire) du générateur solaire (panneau solaire ou un de ses appendices) et à une distance convenable du corps du satellite, de façon à obtenir une température compatible avec l'emploi de matériaux supraconducteurs pour la circulation du courant.

Ce dispositif de stabilisation d'attitude se compose essentiellement des éléments suivants :

- une boucle de courant en matériau supraconducteur, par exemple du type $YBa_2Cu_3O_7$, $Bi_2Sr_2Ca_2Cu_3O_{10}$ ou $Bi_2Sr_2CaCu_9O_8$... présentant une température critique compatible avec la température imposée par la proximité des éléments environnant (générateur solaire, corps du satellite). Les caractéristiques de cette boucle sont telles que son moment magnétique interagisse avec le champ magnétique terrestre en créant un couple sensiblement égal et opposé à la valeur du couple de pression de radiation solaire exercé sur le satellite. La forme extérieure et la section du circuit sont quelconques, pourvu que la condition précédente, au moins approximativement, soit remplie ;
- un support, recevant outre le circuit supraconducteur précédent, un circuit résistif en matériau résistif classique (nickel-chrome, graphite ou autre) destiné à assurer un réchauffage de durée limitée d'au moins une partie de la boucle supraconductrice (une à quelques minutes) du premier circuit, provoquant sa transition à l'état non supraconducteur ;
- une boucle auxiliaire de courant en matériau conducteur classique (par exemple un bobinage en aluminium ou autre), voisine et pouvant être liée structuralement aux précédentes. Cette dernière est destinée :
    . aux initialisations du courant dans la boucle supraconductrice,
    . à se substituer à la boucle principale en cas de panne de celle-ci.

Les caractéristiques de cette boucle auxiliaire sont telles qu'elle puisse engendrer un flux magnétique égal à celui devant régner dans la boucle principale en régime nominal, ce dernier étant obtenu par "transfert" d'une boucle sur l'autre (conservation du flux magnétique). La dissipation thermique dûe à ce circuit doit par ailleurs rester compatible avec les exigences de température de la boucle principale.

L'ensemble du dispositif peut être implanté sur un panneau solaire du générateur solaire ou bien sur un appendice de ce dernier.

En configuration générateur solaire stocké, le dispositif peut se trouver indifféremment à l'extérieur (côté espace) ou à l'intérieur du générateur solaire. La seconde solution a l'avantage d'autoriser un fonctionnement du générateur solaire "sans déploiement" en orbite de transfert.

En fonctionnement, la succession des principales opérations est la suivante :

1. Déploiement complet du générateur solaire en orbite. Le dispositif se stabilise thermiquement à une température correspondant à un état supraconducteur.

2. Réchauffage de la boucle supraconductrice de façon à provoquer la transition de la boucle à l'état non supraconducteur (T > Tc).

3. Alimentation de la boucle auxiliaire de façon à générer le flux nominal dans le dispositif. La puissance nécessaire à cette initialisation est assurée par le générateur solaire, ainsi que celle nécessaire au réchauffage.

4. Arrêt du réchauffage.

5. Arrêt de l'alimentation de la boucle auxiliaire.

6. Fonctionnement nominal de la boucle supraconductrice, le couple produit équilibrant sensiblement le couple de pression solaire.

7. Alimentation contrôlée de la boucle auxiliaire de façon à équilibrer les variations saisonnières de la pression solaire (il peut y avoir plusieurs boucles supraconductrices et plusieurs boucles auxiliaires dont un nombre variable est actif à un moment donné).

Des objets, caractéristiques et avantages de l'invention ressortent de la description qui suit, donnée à titre d'exemple non limitatif, en regard des dessins annexés sur lesquels :

- la figure 1 est une vue schématique d'un satellite conforme à l'invention comportant une boucle supraconductrice pour sa stabilisation en attitude. Ce générateur solaire étant vu de dos, et
- la figure 2 est une vue en coupe selon la ligne 2-2 de la figure 1 du dispositif de stabilisation en attitude de la figure 1.

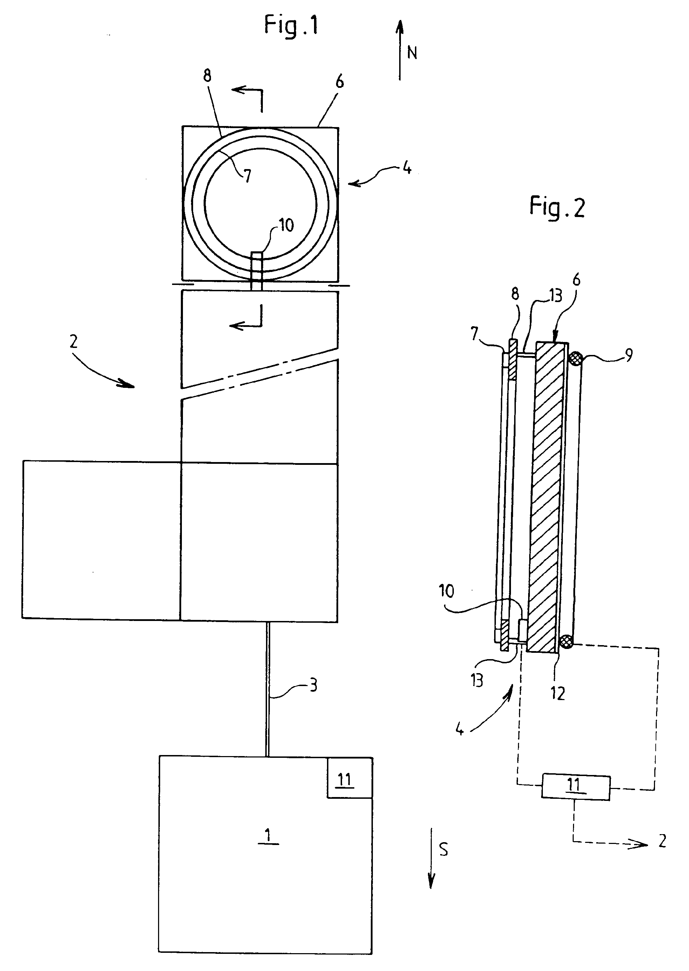

La figure 1 représente un exemple de configuration d'un satellite conforme à l'invention.

Il comporte principalement un corps de satellite 1 équipé d'un générateur solaire 2 déployable entre une configuration repliée (phase de lancement) et une configuration déployée de service dans laquelle il est connecté au corps 1 par un bras 3. Ce générateur solaire est orientable vis à vis du corps de satellite et est maintenu, par des moyens classiques connus, en permanence en regard du soleil.

Le satellite comporte en outre un dispositif de stabilisation en attitude 4 porté par ce générateur solaire.

Dans l'exemple considéré ici, le satellite est en orbite géostationnaire et présente une configuration dissymétrique (générateur solaire à aile unique orientée vers le Nord) donnant lieu à un couple perturbateur T dû à la pression de radiation solaire sur ce générateur solaire. Une valeur moyenne de l'ordre de $10^{-4}$ Newton.mètre sera considérée ici pour ce couple T.

Le moment magnétique nécessaire à la compensation de ce couple vaut $M = \dfrac{T}{B}$, soit environ 1.000 am-pères. m2, pour une valeur du champ terrestre de l'ordre de $10^{-7}$ Tesla à cette position spatiale.

Les dimensions typiques du générateur solaire considérées ici (longueur 5 à 10 m, largeur 1 à 2,5 m) et les contraintes de stockage sous coiffe au lancement du staellite, permettent en pratique d'implanter la boucle de compensation 4 sur un volet du générateur solaire ou, comme c'est le cas ici, sur un volet supplémentaire de dimensions typiquement égales à 1.5 mètre par côté (carré), ici articulé comme les autres volets du générateur solaire, à l'extrémité libre de ce dernier.

Ce volet ou panneau supplémentaire, sur lequel repose le système de compensation 4 comprend un panneau support 6, une boucle supraconductrice fermée 7, un cadre de support 8, une boucle auxiliaire 9, un circuit résistif 10 et un circuit de commande 11.

Le panneau support 6 peut être réalisé en matériau composite (sandwich "Nida" fibre de verre type "NOMEX" avec semelles carbone par exemple) ; l'épaisseur typique est d'environ 1,5 cm pour les dimensions latérales considérées.

Ce panneau est revêtu d'un matériau 12 à haute réflectivité (SSM ou OSR, abréviations anglaises de "Secondary Surface Mirror" ou "Optical Surface Reflector") sur la face exposée au rayonnement solaire en vue d'une température minimale.

La boucle fermée 7 est réalisée en matériau supraconducteur type $YBa_2\,Cu_3\,O_7$, formant la boucle de courant principale du dispositif de compensation. D'autres matériaux supraconducteurs sont utilisables égale-ment : $Bi_2\,Sr_2\,CaCu_2O_8$, $Th_2Ba_2\,CaCu_2O_8$, $Bi_2\,Sr_2\,Ca_2\,Cu_2\,O_{10}$..... On considérera, ici une forme extérieure circulaire, correspondant à l'utilisation du matériau sous forme de ruban. Des formes différentes sont également envisageables (rectangulaires (avec des angles arrondis favorables à hautes densités de courant) ...) dans le cas d'une réalisation du matériau supraconducteur sous forme d'un dépôt de couche mince sur un substrat.

Les dimensions typiques du ruban sont :

- diamètre extérieur de la boucle : environ 1,5 mètre
- largeur : environ 1 centimètre
- épaisseur : environ 10 à 100 μmètre.

De telles valeurs autorisent des densités de courant de $10^4$ à $10^5$ ampères/cm2 et sont donc compatibles avec l'intensité nécessaire à l'obtention du moment magnétique souhaité, soit ici :

$$I = \frac{1000\ A\ m^2}{\pi(1.5/4)^2}\quad \text{env. } 600\ \text{ampères}$$

Le cadre 8 supporte le circuit précédent et est de forme type "couronne". Ce cadre peut être réalisé en matériau composite comme le panneau 6 et comporte un revêtement adéquat, destiné à maintenir la température de la boucle 7 à un niveau correspondant à son état supraconducteur (ici de l'ordre de 75°K compte tenu d'une marge convenable). On utilisera à cet effet en principe de la peinture noire sur la face du côté de la boucle 7 et un revêtement thermiquement isolant multi-couches sur l'autre face (côté du panneau 6).

Le cadre 8 est relié mécaniquement au panneau support 6 au moyen de supports 13 en matériau à très faible conductivité thermique (fibre de carbone par exemple) d'une hauteur assurant un écartement suffisant entre le panneau 6 et le cadre 8 (typiquement 10 cm).

Le circuit auxiliaire 9 est en matériau conducteur (aluminium par exemple) ; il est destiné à l'initialisation du courant dans la boucle principale 7. Ses dimensions extérieures sont sensiblement les mêmes que celles de la boucle (sections circulaires équivalentes, diamètres voisins) et son implantation s'effectue sur la face opposée (exposée au soleil) en vue d'un impact thermique minimal sur la boucle 7 quand celle-ci est à l'état supraconducteur et que du courant circule dans la boucle 9.

Ce circuit ou boucle auxiliaire est en pratique un bobinage à spires parallèles à la boucle 7.

Lors de l'initialisation du système, cette boucle auxiliaire 9 est alimentée en courant au moyen du générateur solaire (commande à bord du satellite), pendant le temps nécessaire (de l'ordre de quelques minutes) aux opérations d'initialisation. Le courant devant circuler est tel que le flux induit dans la boucle principale 7 corresponde à l'intensité de courant souhaitée dans cette boucle. Compte tenu du fort couplage entre les deux boucles, une valeur voisine en Ampères.tours répartis sur n spires de courant est nécessaire, soit environ 600 Ampères.tours ici.

Le nombre de spires n est tel que la tension aux bornes du circuit 9 corresponde au plus à celle fournie par le générateur solaire au satellite. Avec une tension d'environ 50 volts, on obtient par exemple de l'ordre de 100 à 200 spires d'une section de l'ordre du millimètre carré.

La méthode d'initialisation de la boucle 7, à l'aide d'une boucle auxiliaire D décrite ici, n'est pas limitative. On peut envisager d'autres dispositifs, reposant par exemple sur l'injection directe d'un courant dans la boucle 7, en utilisant un commutateur supraconducteur.

Le circuit 10 est destiné au réchauffage local de la boucle 7 ; il est destiné à annuler ses propriétés supraconductrice de cette boucle 7 lorsque cela s'avère nécessaire. Ce circuit est réalisé au moyen d'un résistor, d'une longueur de quelques centimètres, en matériau résistif (type Nickel Chrome ou graphite par exemple), alimenté par le générateur solaire.

Le circuit de commande schématisé en 11 est connecté à la partie électrique du générateur solaire (ou à des batteries) à la boucle auxiliaire 9 et au circuit résistif 10. Il sert à déclencher et interrompre l'alimentation électrique des éléments 9 et 10.

Le fonctionnement de l'ensemble du système s'effectue comme indiqué précédemment.

La modulation du couple de compensation de façon à compenser les variations saisonnières du couple de pression de radiation solaire (de l'ordre de 10 %, du fait de l'inclinaison de 23°5 de l'orbite terrestre), ou de tout autre perturbateur de nature différente, éventuellement, peut être obtenue :

- par un fonctionnement de la boucle 7 commandé en tout ou rien : cette boucle 7 est dimensionnée de façon à compenser la valeur maximum du couple perturbateur ; et son fonctionnement est interrompu périodiquement selon une loi de contrôle prédéterminée (ou déterminable au sol ou à bord) adaptée à suivre en moyenne les variations de couple perturbateur. Le nombre d'interruptions/ré-initialisations n'est pas limité ;
- par un dispositif de contrôle du niveau du moment magnétique total du système décrit précédemment ;
- par l'utilisation d'une boucle secondaire découplée des précédentes, dont l'intensité du courant y circulant est assujettie à suivre les seules variations, saisonnières ou autres ;
- par la mise en oeuvre de plusieurs ensembles 4 indépendants, de puissances avantageusement différentes ; par le choix approprié de ceux de ces ensembles que l'on active ou non à un moment donné, on peut varier le couple compensateur total et suivre par paliers les variations du couple perturbateur (par exemple il peut y avoir 3 ensembles dont deux ensembles de puissance plus faibles que le premier).

Il va de soi que la description qui précède n'a été proposée qu'à titre d'exemple non limitatif et que de nombreuses variantes peuvent être proposées par l'homme de l'art sans sortir du cadre de l'invention défini par les revendications.

## Revendications

1. Satellite comportant un générateur solaire (2) déployable orientable vis à vis du corps (1) de satellite et destiné à être maintenu en permanence en regard du Soleil, ainsi qu'un dispositif (4) de stabilisation d'attitude, caractérisé en ce que ce dispositif de stabilisation d'attitude comporte au moins :

- une boucle fermée (7) en matériau supraconducteur portée par un support lié (6) au générateur solaire, et disposée sur une face de ce support qui est sensiblement orientée à l'opposé du Soleil ;
- une boucle secondaire (9) parallèle à la boucle fermée, sensiblement de même forme et dimensions que la boucle fermée, portée par ce support à proximité de cette boucle ;
- un circuit résistif (10) porté par ce support à proximité d'une partie au moins de la boucle fermée ; et
- un circuit électrique (11) d'alimentation sélective connecté électriquement à la boucle secondaire et au circuit résistif.

2. Satellite selon la revendication 1, caractérisé en ce que la boucle fermée (7) en matériau supraconducteur est dans un plan parallèle aux panneaux du générateur solaire.

3. Satellite selon la revendication 1 ou la revendication 2, caractérisé en ce que le support (6) est un panneau additionnel lié mécaniquement au générateur solaire.

4. Satellite selon la revendication 3, caractérisé en ce que ce panneau additionnel est articulé sur l'extrémité du générateur solaire qui est le plus éloigné du corps de satellite.

5. Satellite selon l'une quelconque des revendications 1 à 4, caractérisé en ce que la boucle fermée (7) en matériau supraconducteur est formée d'un ruban sensiblement circulaire.

6. Satellite selon l'une quelconque des revendications 1 à 4, caractérisé en ce que la boucle fermée est constituée par un dépôt de couches minces de matériau supraconducteur sur un substrat.

7. Satellite selon l'une quelconque des revendications 1 à 6, caractérisé en ce que la boucle fermée est portée par un cadre (8) relié mécaniquement au support par des moyens (13) en matériau thermiquement isolant.

8. Satellite selon l'une quelconque des revendications 1 à 7, caractérisé en ce que la boucle secondaire (9) est disposée sur le support à l'opposé de cette boucle.

9. Satellite selon l'une quelconque des revendications 1 à 8, caractérisé en ce que le circuit résistif (10) et la boucle secondaire (9) sont alimentés électriquement par le générateur solaire.

10. Satellite selon l'une quelconque des revendications 1 à 9, caractérisé en ce que le générateur solaire est à aile unique.


**Patentansprüche**

1. Satellit mit einem ausklappbaren, bezüglich des Satellitenkörpers (1) schwenkbaren Solargenerator (2), der ständig der Sonne zugewandt gehalten werden soll, und einer Lagestabilisierungsvorrichtung (4), dadurch gekennzeichnet, daß diese Lagestabilisierungsvorrichtung wenigstens umfaßt:

- eine geschlossene Schleife (7) aus einem supraleitenden Werkstoff, die von einem mit dem Solargenerator verbundenen Träger (6) getragen ist und auf einer Seite dieses Trägers angeordnet ist, die im wesentlichen entgegengesetzt zur Sonne gerichtet ist,
- eine zur geschlossenen Schleife parallele Sekundärschleife (9), die im wesentlichen dieselbe Form und dieselben Abmessungen wie die geschlossene Schleife hat und von diesem Träger in Nähe dieser Schleife getragen ist,
- einen resistiven Kreis (10), der von diesem Träger in Nähe wenigstens eines Teils der geschlossenen Schleife getragen ist, und
- einen elektrischen Kreis (11) zur wahlweisen Speisung, der mit der Sekundärschleife und mit dem resistiven Kreis elektrisch verbunden ist.

2. Satellit nach Anspruch 1, dadurch gekennzeichnet, daß die geschlossene Schleife (7) aus supraleitendem Werkstoff in einer zu den Panels des Solargenerators parallelen Ebene liegt.

3. Satellit nach Anspruch 1 oder 2, dadurch gekennzeichnet, daß der Träger (6) ein mit dem Solargenerator

6

mechanisch verbundenes Zusatzpanel ist.

4. Satellit nach Anspruch 3, dadurch gekennzeichnet, daß das Zusatzpanel an dem Ende des Solargenerators angelenkt ist, das vom Satellitenkörper am weitesten entfernt ist.

5. Satellit nach einem der Ansprüche 1 bis 4, dadurch gekennzeichnet, daß die geschlossene Schleife (7) aus supraleitendem Werkstoff von einem im wesentlichen kreisförmigen Band gebildet ist.

6. Satellit nach einem der Ansprüche 1 bis 4, dadurch gekennzeichnet, daß die geschlossene Schleife aus einem Dünnschichtbelag aus supraleitendem Werkstoff auf einem Substrat besteht.

7. Satellit nach einem der Ansprüche 1 bis 6, dadurch gekennzeichnet, daß die geschlossene Schleife von einem Rahmen (8) getragen ist, der mit dem Träger durch Mittel (13) aus thermisch isolierendem Werkstoff mechanisch verbunden ist.

8. Satellit nach einem der Ansprüche 1 bis 7, dadurch gekennzeichnet, daß die Sekundärschleife (9) auf dem Träger auf der dieser Schleife entgegengesetzten Seite angeordnet ist.

9. Satellit nach einem der Ansprüche 1 bis 8, dadurch gekennzeichnet, daß der resistive Kreis (10) und die Sekundärschleife (9) durch den Solargenerator elektrisch gespeist sind.

10. Satellit nach einem der Ansprüche 1 bis 9, dadurch gekennzeichnet, daß der Solargenerator einen einzigen Flügel hat.

## Claims

1. A satellite having a deployable solar generator (2) which can be orientated with respect to the body (1) of the satellite, and which is adapted to be kept in facing relationship to the Sun at all times, together with an attitude stabilising device (4), characterised in that the said attitude stabilising device comprises at least:
   - a closed loop (7) of superconducting material, carried by a support (6) coupled to the solar generator and disposed on one face of the said support which is orientated substantially away from the Sun;
   - a secondary loop (9), parallel to the closed loop and being substantially of the same shape and dimensions as the closed loop, and carried by the support close to the said loop;
   - a resistive circuit (10) carried by the said support close to at least part of the closed loop; and
   - a selective electrical supply circuit (11) which is connected electrically to the secondary loop and to the resistive circuit.

2. A satellite according to Claim 1, characterised in that the closed loop (7) of superconducting material is in a plane parallel to the panels of the solar generator.

3. A satellite according to Claim 1 or Claim 2, characterised in that the support (6) is an additional panel which is coupled mechanically to the solar generator.

4. A satellite according to Claim 3, characterised in that the said additional panel is articulated on the end of the solar generator which is furthest away from the body of the satellite.

5. A satellite according to any one of Claims 1 to 4, characterised in that the closed loop (7) of superconducting material consists of a substantially circular strip.

6. A satellite according to any one of Claims 1 to 4, characterised in that the closed loop consists of a deposit of thin layers of superconducting material on a substrate.

7. A satellite according to any one of Claims 1 to 6, characterised in that the closed loop is carried by a frame (8), which is connected mechanically to the support by means (13) which are made of a thermally insulating material.

8. A satellite according to any one of Claims 1 to 7, characterised in that the secondary loop (9) is disposed on the support on the opposite side from the said loop.

9. A satellite according to any one of Claims 1 to 8, characterised in that the resistive circuit (10) and the secondary loop (9) are electrically supplied by the solar generator.

10. A satellite according to any one of Claims 1 to 9, characterised in that the solar generator has a single wing.

## Fig.1

N

8    6

7

4

10

2

3

11

1

S

## Fig.2

8    13    6

7    9

10

13

4    12

11

2